# EUROPEAN PATENT APPLICATION

(11) **EP 2 742 998 A2**
(43) Date of publication of application: **18.06.2014**
(21) Application number: 13163703.5
(22) Date of filing: 15.04.2013
(51) Int. Cl.: B01J 23/44, B01D 53/94

(54) **Diesel oxidation catalyst**

(30) Priority: 13.12.2012 KR 20120145782
(71) Applicant: HYUNDAI MOTOR COMPANY, Seoul 137-938 (KR)
(72) Inventor: Lee, Hyo Kyung, 431-050 Anyang-si (KR)
(74) Representative: Viering, Jentschura & Partner Patent- und Rechtsanwälte

(57) **Abstract**

A diesel oxidation catalyst includes: a first catalyst prepared on the surface of a carrier and embodied by using Pd as a supporter of CeO₂; and a second catalyst prepared on the surface of the first catalyst and embodied by using Pt as a supporter of Al₂O₃.

## Description

### CROSS-REFERENCE TO RELATED APPLICATION

The present application claims priority of Korean Patent Application Number 10-2012-0145782 filed December 13, 2012, the entire contents of which application is incorporated herein for all purposes by this reference.

### BACKGROUND OF INVENTION

### Field of Invention

The present invention relates to a diesel oxidation catalyst, particularly to a diesel oxidation catalyst not increasing an amount of precious metal but improving low temperature activity of a catalyst so as to maximize oxidation performance.

### Description of Related Art

Generally, a catalyst for purifying exhaust gas of a vehicle is manufactured by coating a catalyst material comprising expensive precious metal on a honeycomb-type carrier in order to increase contact area of the catalyst and the exhaust gas, i.e., reaction surface area.

On the other hand, in the case of the previous diesel oxidation catalysts, CO, HC and SOF, which are toxic to human body, in the emitted exhaust gas are removed by oxidation reaction by using precious metal such as Pt and Pd as an active material of the CO/HC oxidation reaction.

Namely, the Pt is used as a major catalyst for diesel due to its excellent low temperature oxidation performance and sulfur resistance, but because it has low stability, its stability is improved by adding Pd thereto. Further, because the Pd can't have oxidation activity under diesel exhaust gas composition, it only performs role as a cocatalyst for improving heat resistance of the Pt, a main catalyst.

By the way, in the case of the previous diesel oxidation catalyst, engine technologies for reducing NOx (decreasing combustion temperature) are applied due to reinforcement of exhaust gas regulation such as E6. Accordingly, there were problems that the low temperature oxidation performance was decreased, thereby exhaust temperature was decreased and exhaust amounts of CO and HC were increased. Further, there was a problem that production cost of the catalyst was increased by using the expensive Pt in bulk.

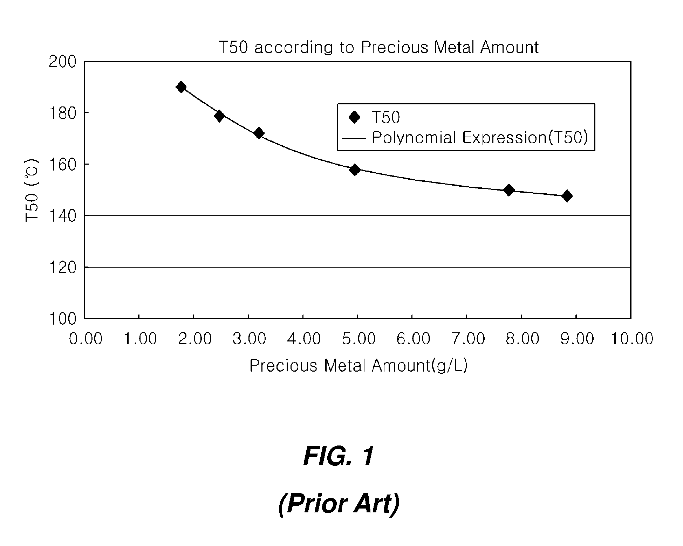

But, a method for improving low temperature activity of the catalyst is to increase the precious metal amount as the exhaust gas temperature decreases, but there is a problem that LOT (catalyst activation temperature) characteristic according to the precious metal amount is gradually decreased as the precious metal amount increases as shown in FIG. 1. Namely, the low temperature activity of the catalyst is not improved even when the precious metal amount is increased.

On the other hand, as a prior art, "oxidative catalyst for reducing particulate matter of diesel engine" of Korean Patent Publication No. 10-1998-082742 has been disclosed.

However, the said prior art also had a problem that it could not enhance the low temperature activity even when the amount of precious metal was increased.

An exemplar of the prior art is Korean Patent Application Publication No. KR 10-1998-082742 A.

The information disclosed in this Background section is only for enhancement of understanding of the general background of the invention and should not be taken as an acknowledgement or any form of suggestion that this information forms the prior art already known to a person skilled in the art.

### BRIEF SUMMARY

The present invention has been made in an effort to solve the above-described problems associated with prior art.

Various aspects of the present invention provide for diesel oxidation catalyst not increasing an amount of precious metal but improving low temperature activity of a catalyst so as to maximize oxidation performance.

Various aspects of the present invention provide for a catalyst is characterized by comprising: a first catalyst prepared on the surface of a carrier and embodied by using Pd as a supporter of CeO₂; and a second catalyst prepared on the surface of the first catalyst and embodied by using Pt as a supporter of Al₂O₃.

The constitution of the present invention catalyst may be characterized by comprising: a first catalyst embodied by using Pd as a supporter of CeO₂ and a second catalyst embodied by using Pt as a supporter of Al₂O₃ prepared on the surface of a carrier.

The second catalyst may further comprise zeolite.

The first catalyst and the second catalyst may be placed on the front-end and the back-end of the carrier.

The first catalyst is placed on the back-end of the carrier against the exhaust gas emission direction; and the second catalyst is placed on the front-end of the carrier against the exhaust gas emission direction.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

FIG. 1 is a drawing showing catalyst activation temperature against precious metal amount of the catalyst according to the prior art.

FIG. 2 is a drawing showing a structure of an exemplary diesel oxidation catalyst of the present invention.

FIG. 3 is a drawing showing a structure of an exemplary diesel oxidation catalyst of the present invention.

FIG. 4 is a drawing showing the result of evaluating CO oxidation activity of diesel vehicle exhaust gas by diesel oxidation catalysts of the present invention and the prior art.

FIGS. 5 (a) and 5(b) are drawings showing CO purifying efficiency and THC purifying efficiency by the diesel oxidation catalyst of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

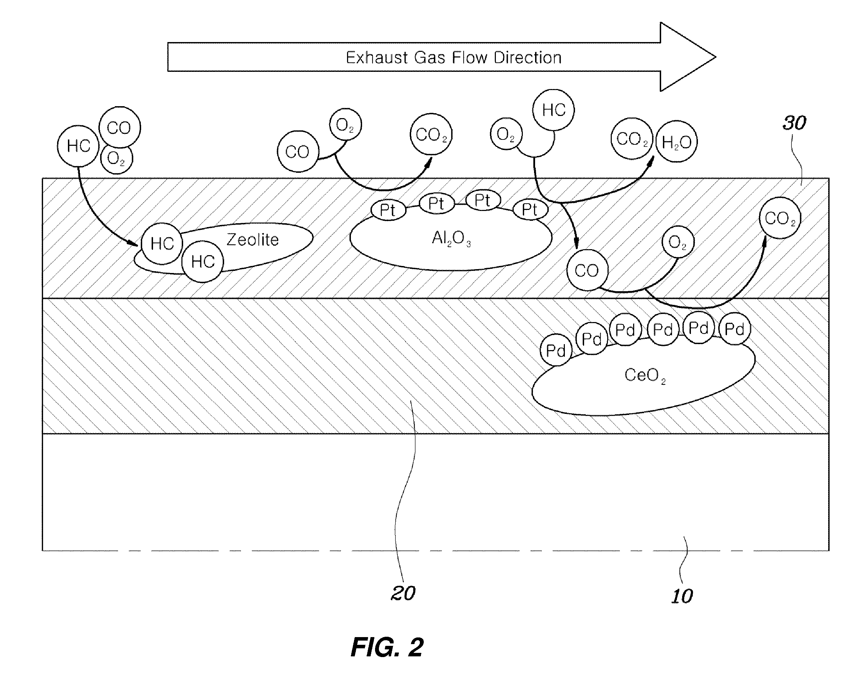

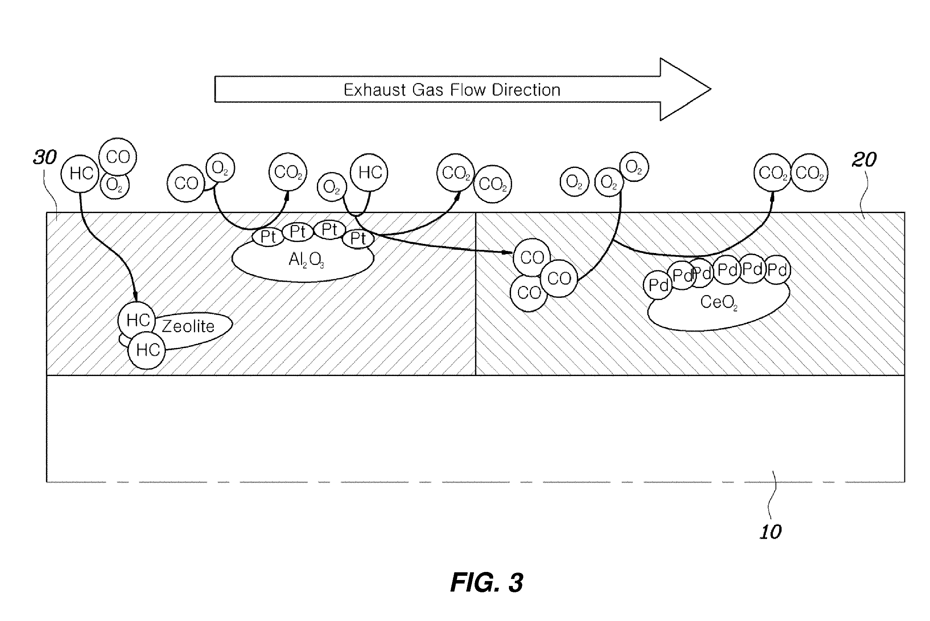

FIG. 2 is a drawing showing an exemplary diesel oxidation catalyst of the present invention, and FIG. 3 is a drawing showing a structure of another exemplary diesel oxidation catalyst of the present invention.

The structure of various embodiments of the diesel oxidation catalyst of the present invention will be described with reference to FIG. 2. The structure can be constituted by comprising: a first catalyst 20 prepared on the surface of a carrier and embodied by using Pd as a supporter of CeO₂; and a second catalyst 30 prepared on the surface of the first catalyst 20 and embodied by using Pt as a supporter of Al₂O₃. Herein, it can be constituted by further containing zeolite in the second catalyst 30.

In addition, the structure of various embodiments of the diesel oxidation catalyst of the present invention will be described with reference to FIG. 3. It can be constituted by comprising a first catalyst 20 embodied by using Pd as a supporter of CeO₂ and a second catalyst 30 embodied by using Pt as a supporter of Al₂O₃ prepared on the surface of a carrier. Herein, it can be constituted by further containing zeolite in the second catalyst 30.

And, the first catalyst 20 and the second catalyst 30 can be placed on the front-end and the back-end of the carrier 10.

The first catalyst 20 may be placed on the back-end of the carrier 10 against the exhaust gas emission direction, and the second catalyst 30 can be placed on the front-end of the carrier 10 against the exhaust gas emission direction.

According to the constitution described above, the present invention maximizes the low temperature oxidation performance of CO by high low oxidation performance of Pd/CeO₂, and particularly, it improves the low temperature oxidation performance of the CO and the HC by suppressing the HC emission through embodying the second catalyst 30.

Namely, as the second catalyst 30, Pt having high oxidation performance against the HC is applied, and therefore, the HC is removed or converted to the CO by partial oxidation reaction so as to reduce the HC emission amount.

Moreover, by applying and coating the zeolite material to the second catalyst 30, the zeolite material adsorbs the HC at the initial stage of cold starting. Accordingly, the HC emission amount can be reduced, and then the HC can be removed by desorption when reaching the Pt catalyst activation temperature.

In the case of the catalyst structure of FIG. 2, the HC can be removed or converted to the CO by being placed the second catalyst 30 comprising the Pt and the zeolite on the path where the exhaust gas flows.

Further, in the case of the catalyst structure of FIG. 3, the HC can be removed or converted to the CO at the front-end of the carrier 10 by installing the second catalyst 30 comprising the Pt and the zeolite on the front-end of the carrier 10. Accordingly, the HC provided to the back-end of the carrier 10 can be intensively suppressed at the front-end.

Moreover, temperature of both of the catalyst structures of FIG. 2 and FIG. 3 rises by exothermic reaction when CO oxidation, and therefore, the oxidation of the HC is accelerated.

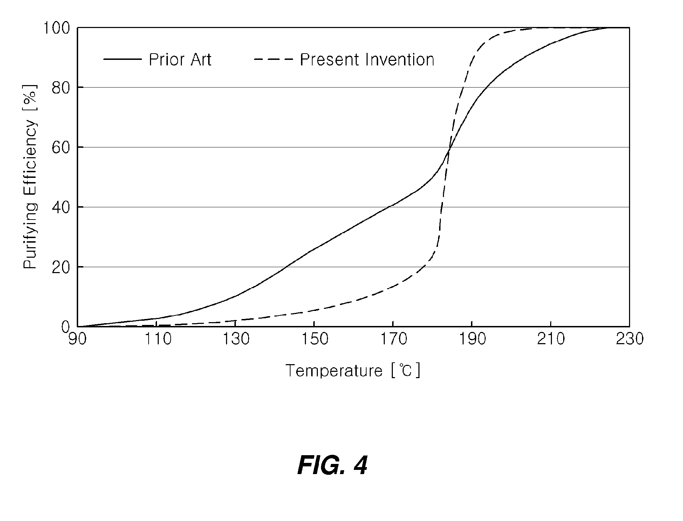

FIG. 4 is a drawing showing the result of evaluating CO oxidation activity of diesel vehicle exhaust gas by diesel oxidation catalysts of the present invention and the prior art.

Conditions of the said evaluation are as follows in Table 1.

**Table 1**

| Evaluation Condition | |
|---|---|
| Gas | Concentration |
| CO | 1000 ppm |
| HC | 1000 ppm |
| O₂ | 10% |
| CO₂ | 5% |
| H₂O | 5% |
| Space Velocity | 60000 hr⁻¹ |
| Heating Rate | 10°C/min |

And, the following Table 2 is the result of FIG. 4 by each temperature range.

**Table 2**

| | Less than 180°C | 180∼210°C | More than 210°C |
|---|---|---|---|
| Present Invention (Pt/Al₂O₃ + Pd/CeO₂) | Very Excellent | Good | Excellent |
| Prior Art (Pt-Pd/Al₂O₃) | Poor | Excellent | Excellent |

Namely, it was confirmed that the present invention showed high oxidation performance at the lower temperature region of less than 180°C. Accordingly, because when city driving of a diesel vehicle, the temperature range of the catalyst is generally 180°C or less, the exhaust gas reducing efficiency is improved by applying the catalyst of the present invention, thereby the precious metal amount can be reduced.

And, the efficiency at the range of 180∼210°C was somewhat weaker than the prior art but good.

Further, it was confirmed that the conversion efficiency was excellent by 100% like the prior art at the temperature range more than 210°C.

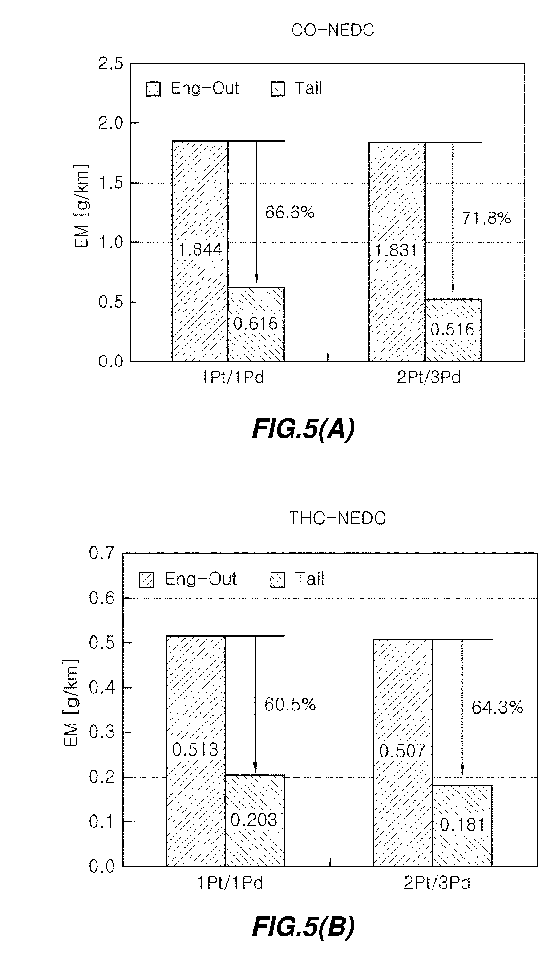

FIG. 5 (a) and (b) are drawings showing CO purifying efficiency and THC purifying efficiency by the diesel oxidation catalyst of the present invention.

Namely, they are the results of NEDC mode evaluation, which is selected as an exhaust gas certification mode in Korea and Europe, by installing the catalysts of the prior art and the present invention to a real vehicle of 2000 cc or less. It was confirmed that as shown in (a), the purifying efficiency of the CO was improved by 5.2% and as shown in (b), the purifying efficiency of the THC was improved by 3.8%.

Further, the present invention, which is high in the Pd amount but low in the precious metal amount, showed much better oxidation performance than the prior art.

By the said means for solving problems, the present invention improves the low temperature activity of the catalyst and thereby maximizes the low temperature oxidation performance of the CO by removing the HC or converting the HC to the CO by the low temperature oxidation reaction of the CO using the Pd catalyst together with the catalyst comprising the Pt and the zeolite. Accordingly, it also has an effect of improving the oxidation performance without increasing the precious metal amount.

For convenience in explanation and accurate definition in the appended claims, the terms front or back, and etc. are used to describe features of the exemplary embodiments with reference to the positions of such features as displayed in the figures.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. A diesel oxidation catalyst comprising:
a first catalyst prepared on a surface of a carrier and embodied by using Pd as a supporter of CeO₂; and
a second catalyst prepared on a surface of the first catalyst and embodied by using Pt as a supporter of Al₂O₃.

2. The diesel oxidation catalyst according to claim 1, wherein the second catalyst further comprises zeolite.

3. A diesel oxidation catalyst comprising a first catalyst embodied by using Pd as a supporter of CeO₂ and a second catalyst embodied by using Pt as a supporter of Al₂O₃ prepared on the surface of a carrier.

4. The diesel oxidation catalyst according to claim 3, wherein the second catalyst further comprises zeolite.

5. The diesel oxidation catalyst according to claim 3, wherein the first catalyst and the second catalyst are placed on a front-end and a back-end of the carrier.

6. The diesel oxidation catalyst according to claim 3, wherein the first catalyst is placed on a back-end of the carrier against an exhaust gas emission direction; and
the second catalyst is placed on a front-end of the carrier against the exhaust gas emission direction.
